# EUROPEAN PATENT APPLICATION

(11) **EP 2 565 818 A1**
(43) Date of publication of application: **06.03.2013**
(21) Application number: 11774382.3
(22) Date of filing: 26.04.2011
(51) Int. Cl.: G06K 7/10

(54) **ANTI-COUNTERFEITING METHOD USING AT LEAST TWO DIFFERENT CODES**

(30) Priority: 27.04.2010 CN 201010156597
(71) Applicant: Pettersson, Hans Jerry Urban, Dongguan, Guangdong 523073 (CN)
(72) Inventor: Pettersson, Hans Jerry Urban, Dongguan, Guangdong 523073 (CN)
(74) Representative: Wesslén, Sara
(86) International application number: PCT/CN2011/073344
(87) International publication number: WO 2011/134391

(57) **Abstract**

The present invention relates to an anti-counterfeiting method by using at least two different codes, comprising: reading the codes by a camera and/or an optical device connected to and/or arranged in a mobile device, and the codes are arranged on different layers of a product and/or the packaging of a product; transmitting the read codes and/or the information interpreted from the codes to the database of the information control center through a communication network, and comparing them with the records in the database to determine the status of the codes; determining the authenticity of the product and/or the code of the product according to the code's status by the information control center; and/or sending the information and/or image to the user by the information control center. The anti-counterfeiting method by using at least two different codes according to the invention scans two independent codes with a scanning code device, and discriminates the authenticity of a product by the information that is turned back from the information control center. The anti-counterfeiting method is practical and reliable, and the information control center can provide thorough service to users.

## Description

### TECHNICAL FIELD

The present invention relates to the field of anti-counterfeiting technology, particularly to an anti-counterfeiting method by using at least two different codes.

### BACKGROUND ART

At present, there are a plurality of goods in the market with anti-counterfeiting codes or labels which are easy to be counterfeited, hard to be discriminated from the fake ones, and have unsatisfying effects. Especially for those high-grade goods, such as wines, healthcare products, rare replenishing products, or the like, they may cost a lot but harmful to the health of the customers if the bought goods are hard to be discriminated from the fake ones. Therefore, a reliable and practical anti-counterfeiting coding technology to fight against the fake and shoddy products and to protect the benefits of the customers is imperative.

### SUMMARY OF THE INVENTION

Regarding the above problems, the purpose of this invention is to provide a reliable and practical anti-counterfeiting method by using at least two different codes.

To achieve the above goal, the following technical solutions will be employed in the invention.

An anti-counterfeiting method by using at least two different codes, comprising: reading the codes by a camera and/or an optical device connected to and/or disposed in a mobile device, and the codes are arranged on different layers of a product and/or the packaging of a product;
transmitting the read codes and/or the information interpreted from the codes to the database of the information control center through a communication network, and comparing them with the records in the database to determine the status of the codes, wherein the status of the codes comprises the matching relationship among the codes, the frequency of one or more codes being read, the order of the codes being read, the time when the codes are read, the position where the codes are read, the IP address and/or device number of the code reading device, and so on;
determining the authenticity of the product and/or the code of the product according to the code's status by the information control center; and/or sending the information and/or image to the user by the information control center.

The code is a label, a graph label, a bar code, a rapid response code and/or a character, or the like.

The code is a part of the product's label, nameplate and mark or is hidden in the label, nameplate and mark.

The code is a product itself, or a part or a component of the product.

The code may be projected onto a product and/or its packaging by a projection device.

The code may be arranged directly on food by an edible pigment.

The one or more codes may belong to a code group, and/or carry information related to the code group to which they belong.

The code and/or code group is activated or locked by the information control center if necessary.

Users can register the purchased product and/or its code by the information control center under a full name or a user name, or anonymity.

The registered users evaluate the registered product.

The information control center provides the registration information of the product and/or its code to users.

The information control center sends advertisement information or promotion information to users.

Users may obtain preferential such as accumulate points or discount according to the records of purchase.

The control center sends promotion information to users according to the code which the users are scanning.

The information control center sends the description information and/or physical image of the product to users for discriminate the authenticity of the product.

The information control center provides the information of the code's status to the enterprise resource planning system and/or customer relationship management system of manufacturers or dealers.

The information control center provides the information of the status of a code group to the enterprise resource planning system and/or customer relationship management system of manufacturers or dealers.

Due to the technical solutions employed, the invention has advantages as follows:
The anti-counterfeiting method by using at least two different codes according to the invention scans at least two independent codes with a scanning code device, and discriminates the authenticity of a product by the information that is turned back from the information control center. The anti-counterfeiting method is practical and reliable, it can make sure that users could purchase the qualified products and the information control center can provide thorough service to users, manufacturers or dealers.

### DESCRIPTION OF FIGURES

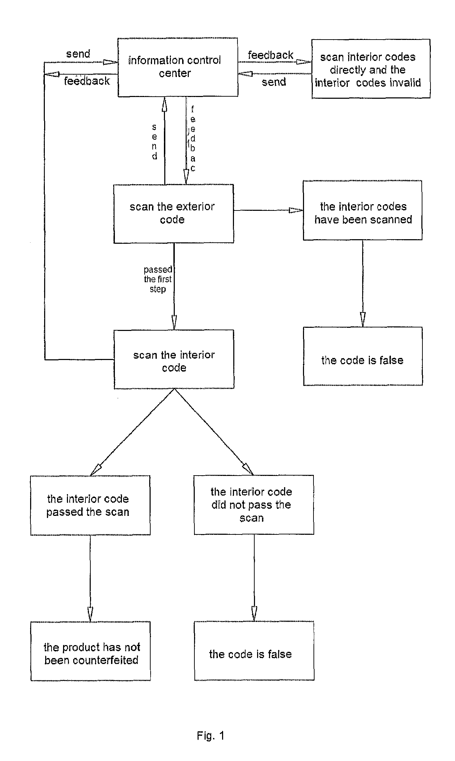

FIG1 is the flow diagram of the anti-counterfeiting method by using at least two different codes according to the invention.

### EMBODIMENT OF THE INVENTION

Now the invention will be described in detail in connection with examples.

As shown in Fig.1 is the flow diagram of the invention's anti-counterfeiting method by using at least two different codes, wherein the used code may be a graph label (such as Microsoft label), a bar code, a QR code (quick response code) or a character, and so on. The code may also be a part of a product's label, nameplate and mark or be hidden in the label, nameplate and mark. For example, the trademark of a product may be used as a code, or manufacturers may use the product's shape or component as the code if the code is the product itself, a part or a component of the product. Alternatively, the code may be projected onto a product and/or its packaging by a projection device; or the code may be arranged directly in the food by an edible pigment, and it may be eaten directly without any influence on the food as a whole.

Moreover, the used codes can be arranged on different layers of a product and/or the packaging of a product, such as outside of the packaging of a product, inside of the packaging of a product, on the outer surface of a product, inside of a product or inside of a sealer, or the like. The used codes read by a camera and/or an optical device that is connected to and/or arranged in a mobile device (which may be a mobile phone and/or a mobile electronic device, such as iPhone, cellphone, iPad, PDA (personal digital assistant) or a portable computer, or the like). The read codes and/or the information interpreted from the codes are transmitted to the database of the information control center through a communication network, and are compared with the records in the database to determine the status thereof, wherein the status of the codes comprises all of the matching relationship among the codes, the frequency of one or more codes being read, the order of the codes being read, the time when the codes are read, the position where the codes are read, the IP address and/or device number of the code reading device, and so on, or any combination thereof. Sequently, the authenticity of the product and/or the code of the product according to the code's status is determined by the information control center.

One or more of the codes may belong to a code group, and may carry information related to the code group to which they belong, such as the position in the storehouse, the time to be transported out of the storehouse, the time to be sold to the dealer of the product that corresponds to the code group.

The mentioned code and/or code group may be activated by the information control center as necessary, for example, only the code and/or code group that corresponds to the sold product is activated, instead of those that haven't been sold. The activated code and/or code group can be locked again by the information control center as necessary, for example, the counterfeited code and/or code group is locked to make it invalid.

Meanwhile, the information control center may provide the status information of the code and/or coding group to the enterprise resource planning system and/or customer relationship management system of manufacturers or dealers for tracing or managing the conditions such as transporting, selling and stocking of the product.

When users are using the products adopting the anti-counterfeiting method by using at least two different codes according to the invention, with the method using two codes as an example, the whole flow of the anti-counterfeiting detection procedure is particularly described as following:
(1) firstly a scanning code device is used to scan exterior codes, then the exterior codes and/or information interpreted therefrom, the serial number of the scanning code device (which may not be sent if the scanning code device has no serial number), and/or the physical position of the scanning code device (which can be determined by the IP address of the internet or the GPS or GSM tracking system of the device) to the information control center in a wired and/or wireless manner. Then, the information control center will send a feedback to the scanning code device of the user through the internet immediately, the feedback includes: the frequency of the exterior code being scanned, the risk level being judged according to the frequency of the exterior code being scanned, corresponded products' information and/or image, and so on. Hereby, the users can see the appearance of the products intuitively, and can discriminate the real products from the fake ones easier. Alternatively, the users may scan interior codes directly, then the information control center will require the users scan the exterior code first and the scanning for the interior codes will be invalid.
(2) when the frequency of the exterior code being scanned in the feedback is within a normal range, the following identification is continuously performed;
when the interior code corresponding to the exterior code has been scanned, after scanning the exterior code the information control center will send relative information indicating that the interior code of the product has been scanned and is false. When the frequency of the exterior code being scanned goes beyond the normal range, the risk level is indicated as high and the code may be false.

When the interior code corresponding to the scanned exterior code has not been scanned and the frequency of the exterior code being scanned is acceptable by users, the users may uncover the exterior packaging, use a scanning code device to scan the interior code, and send information to the information control center to determine whether the exterior and interior codes are matched to each other. If they are matched, the scanning for the interior code can be passed, which indicates that the interior code is true. Otherwise, the scanning for the interior code can not be passed, which indicates that the interior code is false, this may be for the reason that the interior code adopts an invalid bar code, or the exterior and interior codes are not matched as two displaced codes, which indicates that the interior code is false.

Moreover, during scanning the exterior and interior codes, if the serial numbers of the two scanning code devices are different, or the IP addresses of the scanning code devices are different, or the interval for scanning the exterior and interior codes is too long, after scanning the interior code, the information control center will send a feedback to require the user to repeat the above detection procedure, so as to ensure the correct match between the exterior and interior codes.

After completing the whole detection procedure or during the detection procedure, the information control center sends advertisement information or promotion information to users, so that the users may get more information about the product. Optionally, when users are scanning the code, the information control center sends promotion information about the product being scanned to a feedback represented for the users.

The anti-counterfeiting method by using at least two different codes of the present invention can be widely applied to all kinds of commodity fields. However, not all purchasers will positively scan the codes, so the manufacturers and dealers may encourage more users to perform scan detection through various methods, for example, purchasers can get trophies or receive discount if at least two codes on the same product are scanned and authorized. To do like this can not only promote the sale of products, but also protect the bilateral benefits of consumers and dealers.

As for the users with the attendance to perform scanning, they can register the product purchased and/or its attached code under their full names, user names, or anonymity by the information control center after passing through the interior code scanning. The users registered may evaluate the product registered according to their willing, or inquiry the state of the purchased products. According to the records of the goods registered, the users can also obtain preferential, such as accumulate points or receive discount, hereby better service can be provided for users. Moreover, the sale of products may be promoted. When the registered product is scanned again, the information control center can tell the user that the product has been registered by some user or anonymity, so as to help the user to tell the true from the false better.

The present invention is illustrated only by using the above-mentioned embodiments, and each step of the invention can be changed. Based on the technical solutions of the present invention, any improvement and equal alternation to a certain step according to the principle of the invention can not be excluded from the protection scope of the invention.

## Claims

1. An anti-counterfeiting method by using at least two different codes, comprising: reading the codes by a camera and/or an optical device that is connected to and/or arranged in a mobile device, and the codes are arranged on different layers of a product and/or the packaging of a product;
transmitting the read codes and/or the information interpreted from the codes to the database of the information control center through a communication network, and comparing them with the records in the database to determine the status of the codes, wherein the status of the codes comprises the matching relationship among the codes, the frequency of one or more codes being read, the order of the codes being read, the time when the codes being read, the position where the codes been read, the IP address and/or device number of the code reading device, and so on;
determining the authenticity of the product and/or it's code according to the code's status by the information control center; and/or sending the information and/or image to the user by the information control center.

2. The anti-counterfeiting method by using at least two different codes of claim 1, **characterized in that** the code is a label, a graph label, a bar code, a rapid response code and/or a character, or the like.

3. The anti-counterfeiting method by using at least two different codes of claim 1, **characterized in that** the code is a part of the product's label, nameplate and mark or is hidden in the label, nameplate and mark.

4. The anti-counterfeiting method by using at least two different codes of claim 1, **characterized in that** the code is a product itself, or a part or a component of the product.

5. The anti-counterfeiting method by using at least two different codes of claim 1, **characterized in that** the code is projected onto a product and/or its packaging by a projection device.

6. The anti-counterfeiting method by using at least two different codes of claim 1, **characterized in that** the code is arranged directly on food by an edible pigment.

7. The anti-counterfeiting method by using at least two different codes of any of claims 2 to 6, **characterized in that** the one or more codes belong to a code group, and/or carry information related to the code group to which they belong.

8. The anti-counterfeiting method by using at least two different codes of claim 7, **characterized in that** the code and/or code group is activated or locked by the information control center if necessary.

9. The anti-counterfeiting method by using at least two different codes of claim 1, **characterized in that** users register the purchased product and/or its code by the information control center under a full name or a user name, or anonymity.

10. The anti-counterfeiting method by using at least two different codes of claim 9, **characterized in that** the registered users evaluate the registered product.

11. The anti-counterfeiting method by using at least two different codes of claim 9, **characterized in that** the information control center provides the registration information of the product and/or its code to users.

12. The anti-counterfeiting method by using at least two different codes of claim 1, **characterized in that** the information control center sends advertisement information or promotion information to users.

13. The anti-counterfeiting method by using at least two different codes of claim 9, **characterized in that** the users obtain preferential, such as accumulate points or discount according to the records of purchase.

14. The anti-counterfeiting method by using at least two different codes of claim 1, **characterized in that** the control center sends promotion information to users according to the code which the users are scanning.

15. The anti-counterfeiting method by using at least two different codes of claim 1, **characterized in that** the information control center sends the description information and/or physical image of the product to users for discriminate the authenticity of the product.

16. The anti-counterfeiting method by using at least two different codes of claim 1, **characterized in that** the information control center provides the information of the code's status to the enterprise resource planning system and/or customer relationship management system of manufacturers or dealers.

17. The anti-counterfeiting method by using at least two different codes of claim 8, **characterized in that** the information control center provides the information of the status of a code group to the enterprise resource planning system and/or customer relationship management system of manufacturers or dealers.
